# EUROPÄISCHE PATENTANMELDUNG

(11) **EP 1 659 274 A2**
(43) Veröffentlichungstag der Anmeldung: **24.05.2006**
(21) Anmeldenummer: 05111043.5
(22) Anmeldetag: 21.11.2005
(51) Int. Cl.: F02B 27/02, F02D 9/14

(54) **Ansaugvorrichtung für eine Brennkraftmaschine**

(30) Priorität: 23.11.2004 DE 102004056441
(71) Anmelder: MANN+HUMMEL GmbH, 71638 Ludwigsburg (DE)
(72) Erfinder: Korn, Alexander, 74363 Güglingen (DE)

(57) **Zusammenfassung**

Eine Ansaugvorrichtung für eine Brennkraftmaschine ermöglicht die vom Betriebszustand abhängige Umschaltung auf verschieden lange Saugrohre zur Erhöhung der Motorleistung. Ein Strömungshauptrohr (1) geht dabei an einer Verzweigungsstelle (5) in einen ersten Teilkanal (2) über und weist eine Abzweigungsöffnung (5) auf, an die sich ein zweiter Teilkanal (3) anschließt. Ein Sperrschieberelement (10) ist vorgesehen, mit dem der erste und/oder der zweite Teilkanal (2, 3) verschließbar sind (ist). Das Sperrschieberelement (10) ist in der Verzweigungsstelle (5) angeordnet und quer zur Mittelachse (4) des Strömungshauptrohrs (1) verschiebbar gelagert. In einer ersten Endlage des Sperrschieberelements (10) ist der erste Teilkanal (2) durch ein Strömungsumlenkungselement (11) verschlossen, welches sich von einer der Abzweigungsöffnung (5) für den zweiten Teilkanal (3) gegenüberliegenden Wandung des Strömungshauptrohrs (1) bis zu einer Wandung des offenen zweiten Teilkanals (3) erstreckt. In einer zweiten Endlage des Sperrschieberelements (10) überdeckt ein mit dem Strömungsumlenkungselement (11) verbundenes Basiselement (12) die Abzweigungsöffnung (5) des zweiten Teilkanals (3).

## Beschreibung

Die Erfindung betrifft eine Ansaugvorrichtung für eine Brennkraftmaschine mit einem Strömungshauptrohr, das an einer Verzweigungsstelle in einen ersten Teilkanal übergeht und eine Abzweigungsöffnung aufweist, an die sich ein zweiter Teilkanal anschließt, und mit einem Sperrschieberelement, mit dem der erste und/oder der zweite Teilkanal verschließbar sind.

Zur Erhöhung der Motorleistung eines Verbrennungsmotors ist es bekannt, eine Aufladung über Saugrohre vorzunehmen. Angeregt durch die Saugarbeit des Kolbens initiiert das sich öffnende Einlassventil eine zurücklaufende Druckwelle, die am offenen Ende des Saugrohrs reflektiert wird und zum Einlassventil zurückläuft. Die dadurch entstehenden Druckschwingungen können zur Steigerung der angesaugten Luftmasse ausgenützt werden. Dieser auf der Gasdynamik beruhende Aufladeeffekt hängt unter anderem von den geometrischen Verhältnissen im Saugrohr und von der Motordrehzahl ab. Die Längen der einzelnen Schwingsaugrohre werden so auf die Ventilsteuerzeiten abgestimmt, dass im gewünschten Drehzahlbereich eine am Ende des Schwingsaugrohrs reflektierte Druckwelle durch das geöffnete Einlassventil läuft. Lange Schwingsaugrohre bewirken somit einen hohen Aufladeeffekt im unteren Drehzahlbereich, kurze Rohre hingegen im oberen Drehzahlbereich des Motors.

Um die Aufladung an den jeweiligen Betriebszustand des Motors anzupassen, ist es beispielsweise aus der EP 1 233 161 A2 bekannt, einen der Teilkanäle, die die Schwingsaugrohre bilden, hinter einer Verzweigungsstelle durch einen Drehschieber verschließbar zu machen. Hierbei kommt es jedoch im abgesperrten Teilkanal zu Teilreflexionen der Druckwelle, insbesondere im Verzweigungsbereich zwischen einem kurzen Leistungskanal und einem langen Drehmomentkanal. Wird beispielsweise der längere Drehmomentkanal hinter der Verzweigungsstelle durch einen Schieber verschlossen, so wird zwar ein Großteil der Druckwelle im kurzen Leistungskanal reflektiert werden; Teile davon laufen jedoch in den abgesperrten Kanal hinein bis zum Sperrschieber. Umgekehrt läuft ein Teil der Druckwelle bei geöffnetem Drehmomentkanal auch in den kürzeren Leistungskanal.

Es stellt sich daher die Aufgabe, eine Ansaugvorrichtung der eingangs genannten Art so zu verbessern, dass eine definierte Strömungstrennung bei der Umschaltung des Saugrohrs in Abhängigkeit vom Motorbetriebszustand bewirkt werden kann.

Diese Aufgabe wird durch eine Ansaugvorrichtung mit den Merkmalen des Anspruchs 1 gelöst.

Hierbei ist vorgesehen, dass das Sperrschieberelement in der Verzweigungsstelle angeordnet und quer zur Mittelachse des Strömungshauptrohrs verschiebbar gelagert ist, wobei in einer ersten Endlage des Sperrschieberelements der erste Teilkanal durch ein Strömungsumlenkungselement verschlossen ist, welches sich von einer der Abzweigungsöffnung für den zweiten Teilkanal gegenüberliegenden Wandung des Strömungshauptrohrs bis zu einer Wandung des offenen zweiten Teilkanals erstreckt und wobei in einer zweiten Endlage des Sperrschieberelements ein mit dem Strömungsumlenkungselement verbundenes Basiselement die Abzweigungsöffnung des zweiten Teilkanals überdeckt.

Es wird in der einen Endlage eine Strömungsumlenkung ohne Toträume auf den Abzweig des zweiten Teilkanals bewirkt. Zugleich ist in der anderen Endlage ein Durchgang der Strömung durch die Verzweigung ohne wesentliche Strömungshindernisse möglich. In beiden Endlagen werden also glatte Strömungswege geschaffen, die keine Toträume mehr aufweisen, in denen wesentliche Teilreflexionen der Druckwelle stattfinden könnten, insbesondere, wenn das Strömungsumlenkungselement eine gekrümmte Umlenkungsfläche aufweist.

Das Sperrschieberelement ist insbesondere mittels eines Schubstangenelements quer zum Verlauf des Hauptströmungskanals verschiebbar. Das Schubstangenelement ist dabei so schmal ausgebildet, dass es ein nur geringes Strömungshindernis darstellt. Es können auch mehrere Schubstangenelemente vorgesehen sein.

Um eine Betätigung des Schieberelements durch einen rotatorischen Antrieb bewirken zu können, kann das Schubstangenelement mit einem Bolzen versehen sein, der innerhalb einer Führungsausnehmung eines schwenkbaren Antriebshebels geführt ist. Der Antriebshebel kann über an sich bekannte Antriebselemente, beispielsweise Schrittmotoren, um einen definierten Winkel verschwenkt werden und zieht dabei über die Führungsausnehmung und das Bolzenelement das Schubstangenelement mit sich.

Bei einer bevorzugten Ausführungsform ist eine Führungseinrichtung wenigstens durch eine Führungsplatte gebildet, die eine Ausnehmung in der der Abzweigungsöffnung gegenüberliegenden Wandung des Strömungshauptrohrs abdeckt und die eine Ausnehmung aufweist, in der das Schubstangenelement geführt ist. Damit ergibt sich bei abgenommener Führungsplatte eine einfache Montage des Sperrschieberelements. Durch diese Montagemöglichkeit können die Abmessungen des Sperrschieberelement größer als der Querschnitt des Strömungshauptrohrs und seiner Abzweigungsöffnung gewählt werden, also auch so groß ausgebildet sein, dass die Abzweigungsöffnung vollständig überdeckt ist.

Die Erfindung wird nachfolgend mit Bezug auf die Zeichnungen näher erläutert. Die Figuren zeigen jeweils in Schnittansicht:
- Fig. 1a, 2a, 2b: eine Ansaugvorrichtung mit Sperrschieberelement in einer ersten Endlage und
- Fig. 1b, 2c, 2d.: die Ansaugvorrichtung mit dem Sperrschieberelement in einer zweiten Endlage.

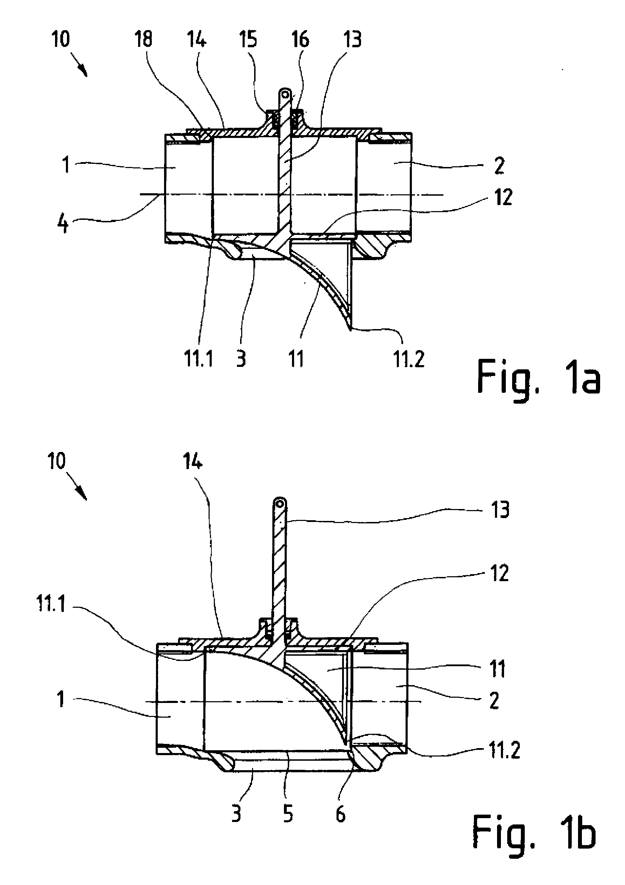

Figur 1a zeigt einen Ausschnitt einer Ansaugvorrichtung. Ein Strömungshauptrohr 1 steht mit einem Zylinderkopf der Brennkraftmaschine in Verbindung. Es verzweigt in dem dargestellten Ausschnitt in einen ersten Teilkanal 2 und einen zweiten Teilkanal 3, wobei sich bei dem dargestellten Ausführungsbeispiel der Teilkanal 2 noch über eine größere Länge erstreckt und als Schwingsaugrohr für ein hohes Drehmoment optimiert ist, wohingegen der Teilkanal 3 als kurzer Leistungskanal ausgeführt ist. Die Ausbildung der Teilkanäle 2, 3 kann aber auch umgekehrt erfolgen.

Die Wandung des Strömungshauptrohrs 1 besitzt an ihrer einen Seite eine Abzweigöffnung 5, an die sich der zweite Teilkanal 3 anschließt. In der in Figur 1a dargestellten Endlage eines Sperrschieberelements 10 überdeckt dieses mit seinem Basiselement 12 die Abdecköffnung 5. Durch das Basiselement 12 ist ein beinahe nahtloser Übergang in der Wandung des Strömungshauptrohrs 1 geschaffen, so dass sich vom Strömungshauptrohr 1 über die Verzweigungsstelle hinweg in den ersten Teilkanal 2 ein Strömungsweg ausbildet, der weitgehend frei von Strömungshindernissen ist, abgesehen von einem Schubstangenelement 13.

Im Bereich der Abzweigöffnung 5 können Vertiefungen 6 (vergl. Figur 1b) eingebracht sein, die etwa der Plattenstärke des Basiselements 12 entsprechen und so eine bündige Aufnahme des Basiselements 12 in der in Figur 1a dargestellten Endlage ermöglichen.

An der der Abzweigöffnung 5 gegenüber liegenden Seite der Wandung des Strömungshauptrohrs 1 und/oder des ersten Teilkanals 2 ist eine Führungseinrichtung für das Schubstangenelement 13 angeordnet. Diese besteht aus einer Führungsplatte 14 mit einem angeformten Kragen 15, in den ein Wellendichtring 16 einsetzbar ist, welcher eine gasdichte Abdichtung des durch eine Ausnehmung in der Führungsplatte 14 hindurch geführten Schubstangenelements 13 bewirkt.

In Figur 1b ist die zweite Endlage des Sperrschieberelements 10 dargestellt. Dieses ist maximal mit seinem Basiselement 12 an die Führungsplatte 14 herangezogen, wozu wiederum entsprechende Vertiefungen 18 in der Führungsplatte 14 vorgesehen sein können (vergl. Figur 1a).

Rückwärtig des Basiselements 12 erstreckt sich ein Strömungsumlenkungselement 11 mit einer vorzugsweise gebogenen Umlenkungsfläche und zwar von einem mit dem Basiselement 12 gemeinsamen Spitzenpunkt 11.1 über die gesamte Öffnungsweite des Strömungshauptrohrs 1 bzw. des ersten Teilkanals 2 hinweg bis zu einem weiteren Spitzenpunkt 11.2, der unmittelbar im Bereich der Abzweigöffnung 5 liegt.

Eine in das Strömungshauptrohr 1 einlaufende Druckwelle wird an der gebogenen Innenfläche des Strömungsumlenkungselements 11 entlang durch die Abzweigöffnung 5 und in den zweiten Teilkanal 3 hinein geleitet. Die dort reflektierte Druckwelle nimmt dann den umgekehrten Weg zurück.

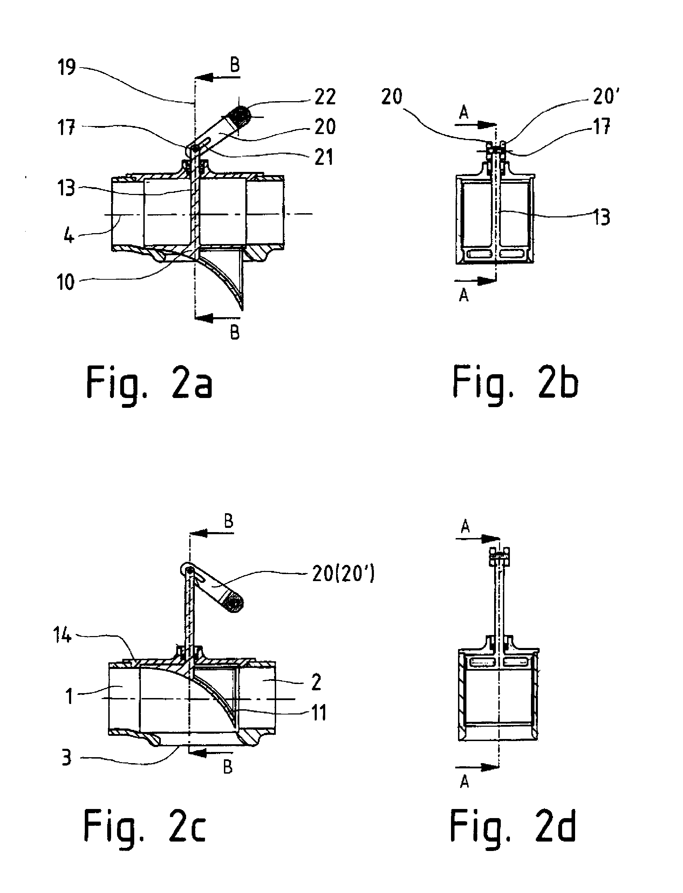

Figur 2a zeigt nochmals die Stellung entsprechend Figur 1a. Zusätzlich ist quer zur Längsachse 19 des Schubstangenelements 13 ein Bolzen 17 eingebracht, welcher in einer Führungsausnehmung 21 eines Antriebshebels 20 geführt ist. Der Antriebshebel 20 ist an einer Drehachse 22 ortsfest gelagert. Er kann über Drehantriebe geschwenkt werden und verschiebt dabei das Sperrschieberelement 10 quer zur Mittelachse 4 des Strömungshauptrohrs 1, entlang der Längsachse 19.

Neben dem Längsschnitt in Figur 2a zeigt der Querschnitt in Figur 2b, dass ein Großteil der Öffnungsweite des Strömungshauptrohrs 1 bei geöffnetem ersten Teilkanal 1 zur Verfügung steht. Lediglich das zentral angeordnete Schubstangenelement 13 muss umströmt werden. Wie Figur 2b weiterhin zeigt, ist der Antrieb vorzugsweise aus zwei parallelen Antriebshebeln 20, 20' gebildet, die zwischen sich das Schubstangenelement 13 einschließen und mit ihren jeweiligen Führungsausnehmungen 21 in einen gemeinsamen Querbolzen 17 eingreifen.

In der zweiten Endlage gemäß Figur 2c sind die Antriebshebel 20, 20' um etwa 90° nach oben geschwenkt und haben dabei den Sperrschieber 10 bis an die Führungsplatte 14 zurückgezogen, so dass das Strömungsumlenkungselement 11 den ersten Teilkanal 2 absperrt und die Strömung in Richtung des zweiten Teilkanals 1 umlenkt.

## Patentansprüche

1. Ansaugvorrichtung für eine Brennkraftmaschine mit einem Strömungshauptrohr (1), das an einer Verzweigungsstelle (5) in einen ersten Teilkanal (2) übergeht und eine Abzweigungsöffnung (5) aufweist, an die sich ein zweiter Teilkanal (3) anschließt, und mit einem Sperrschieberelement (10), mit dem der erste und/oder der zweite Teilkanal (2, 3) verschließbar sind (ist), **dadurch gekennzeichnet, dass** das Sperrschieberelement (10) in der Verzweigungsstelle (5) angeordnet und quer zur Mittelachse (4) des Strömungshauptrohrs (1) verschiebbar gelagert ist, wobei in einer ersten Endlage des Sperrschieberelements (10) der erste Teilkanal (2) durch ein Strömungsumlenkungselement (11) verschlossen ist, welches sich von einer der Abzweigungsöffnung (5) für den zweiten Teilkanal (3) gegenüberliegenden Wandung des Strömungshauptrohrs (1) bis zu einer Wandung des offenen zweiten Teilkanals (3) erstreckt und wobei in einer zweiten Endlage des Sperrschieberelements (10) ein mit dem Strömungsumlenkungselement (11) verbundenes Basiselement (12) die Abzweigungsöffnung (5) des zweiten Teilkanals (3) überdeckt.

2. Ansaugvorrichtung nach Anspruch 1, **dadurch gekennzeichnet, dass** das Strömungsumlenkungselement (11) rückwärtig des Basiselements (12) angeordnet und in der zweiten Endlage innerhalb des zweiten Teilkanals (3) positioniert ist.

3. Ansaugvorrichtung nach Anspruch 1 oder 2, **dadurch gekennzeichnet, dass** das Sperrschieberelement (10) durch wenigstens ein Schubstangenelement (13) betätigbar ist, das sich von dem Basiselement (12) wenigstens bis zu einer Führungseinrichtung (14, 15, 16) an der der Abzweigungsöffnung (5) gegenüberliegenden Wandung des Strömungshauptrohrs (1) erstreckt.

4. Ansaugvorrichtung nach Anspruch 3, **dadurch gekennzeichnet, dass** die Führungseinrichtung wenigstens eine Führungsplatte (14) umfasst, die eine Ausnehmung in der der Abzweigungsöffnung (5) gegenüberliegenden Wandung des Strömungshauptrohrs (1) abdeckt und die eine Ausnehmung aufweist, in der das Schubstangenelement (13) geführt ist.

5. Ansaugvorrichtung nach Anspruch 3 oder 4, **dadurch gekennzeichnet, dass** das Schubstangenelement (13) wenigstens einen senkrecht zu seiner Längsachse angeordneten Bolzen (17) aufweist, der in eine Führungsausnehmung (21) eines schwenkbar gelagerten Antriebshebels (20) eingreift.

6. Ansaugvorrichtung nach einem der Ansprüche 1 bis 5, **dadurch gekennzeichnet, dass** das Strömungsumlenkungselement (11) eine bogenförmige Umlenkungsfläche aufweist.
